# EUROPÄISCHE PATENTSCHRIFT

(11) **EP 2 091 782 B1**
(45) Veröffentlichungstag und Bekanntmachung des Hinweises auf die Patenterteilung: **30.11.2011**
(21) Anmeldenummer: 07818716.8
(22) Anmeldetag: 05.10.2007
(51) Int. Cl.: B60Q 1/26, B60Q 1/52, B60J 3/06

(54) **FAHRZEUG**
VEHICLE
VÉHICULE

(30) Priorität: 22.11.2006 DE 102006054917
(43) Veröffentlichungstag der Anmeldung: 26.08.2009
(73) Patentinhaber: Bayerische Motoren Werke Aktiengesellschaft, 80809 München (DE)
(72) Erfinder: STAHL, Hans-Ulrich, 80809 München (DE); KRON, Alexander, 80995 München (DE); MAIER, Thoralf, 82110 Germering (DE); STURM, Dietrich, 81476 München (DE)
(74) Vertreter: Mayer-Martin, Christian
(86) Internationale Anmeldenummer: PCT/EP2007/008639
(87) Internationale Veröffentlichungsnummer: WO 2008/061592

(56) Entgegenhaltungen:
- DE-A1- 4 330 708
- DE-U1-202004 008 856
- US-A- 4 351 557

## Beschreibung

Die Erfindung betrifft ein Fahrzeug, das eine außerhalb der Fahrgastzelle angeordnete Leuchte umfasst.

Die rasante technologische Entwicklung auf dem Gebiet der Fahrerassistenzsysteme führt derzeit zur Entwicklung und Bereitstellung von Spurwechselassistenzsystemen. Dabei werden beispielsweise durch Leuchtmittel, die im Bereich des Außenspiegels angeordnet sind, dem Fahrer Informationen oder Warnungen signalisiert.

Das von einem solchen Leuchtmittel abgestrahlte Licht trifft, ehe es das Auge des Fahrers erreicht, auf eine Fahrzeugscheibe (z. B. die Seitenscheibe des Fahrzeuges). Durch diese Seitenscheibe wird je nach Einfallswinkel ein Teil des Lichtes reflektiert und ein anderer Teil des Lichtes transmittiert. Der reflektierte Anteil wirkt erstens störend für andere Verkehrsteilnehmer und steht zweitens nicht zur Signalisierung für den Fahrer zur Verfügung.

Aus der DE 4330708A1 ist ein optisches Sicherheits-Verkehrssystem mit Lichtpolarisatoren für die Vermeidung von Blendung durch Fahrzeugscheinwerfer bekannt, wobei Teile der Lichtpolarisatoren vor Lichtquellen geschaltet werden und andere Teile der Lichtpolarisatoren entweder vor, in oder hinter lichtdurchlässige Materialien (z. B. Glas, Spiegel, etc.) aufgetragen werden. Die Intensität des durch die Lichtpolarisatoren durchdringenden Lichts wird durch variable oder feste Kreuzung der Schwingungsebenen der verschiedenen oben genannten Lichtpolarisatoren kontrolliert. Der durch die Lichter der verschiedenen Fahrzeuge und Straßenlampen oder deren Reflexionen verursachte Blendeffekt wird durch diese Kreuzung der oben genannten Lichtpolarisatoren variiert oder voll verhindert.

DE 20 2004 008 856 U1 zeigt ein Fahrzeug gemäß dem Oberbegriff von Anspruch 1.

Der vorliegenden Erfindung liegt nun die Aufgabe zu Grunde, dem Fahrer eines Fahrzeuges wirksam Informationen durch ein Leuchtmittel außerhalb der Fahrgastzelle zu signalisieren.

Diese Aufgabe wird durch die Merkmale des Hauptanspruchs gelöst. Vorteilhafte Weiterbildungen der Erfindung sind den abhängigen Ansprüchen zu entnehmen.

Die Erfindung basiert demnach auch auf dem Gedanken, das Leuchtmittel derart anzuordnen und auszuführen, dass Licht des Leuchtmittels im Wesentlichen parallel zu einer Einfallsebene des Lichtes polarisiert ist oder wird.

Das Fahrzeug umfasst eine außerhalb der Fahrgastzelle angeordnete Leuchte und eine Fahrzeugscheibe, durch die Licht der Leuchte in das Fahrzeug dringt, wobei die Leuchte derart angeordnet und ausgeführt ist, dass Licht der Leuchte parallel zu einer Einfallsebene des Lichtes polarisiert ist oder wird. Die Leuchte umfasst dazu eine Polarisationseinrichtung oder ist der Leuchte eine Polarisationseinrichtung zugeordnet, die derart angeordnet und ausgeführt ist, dass Licht der Leuchte parallel zu einer Einfallsebene des Lichtes polarisiert ist oder wird.

Dadurch wird erreicht, dass der durch die Fahrzeugscheibe reflektierte Anteil des Lichtes reduziert, insbesondere minimiert wird, und der durch die Fahrzeugscheibe transmittierte Anteil des Lichtes erhöht, insbesondere maximiert wird. Dies ergibt sich aus den so genannten Fresnelschen Formeln. Dadurch wird erreicht, dass Störungen anderer Verkehrsteilnehmer durch reflektiertes Licht reduziert werden, wohingegen der Fahrer das transmittierte Licht gut wahrnehmen kann.

Die Leuchte oder das Leuchtmittel können eine Lichtquelle, wie eine Leuchtdiode, und/oder einen Reflektor umfassen. Im Rahmen der Erfindung umfasst der Begriff "Leuchte" auch aktive oder passive Anzeigeleuchten oder Leuchtanzeigen, wie beispielsweise ein LCD oder ein OLED-Display. Die Leuchte kann auch in einen Spiegel integriert sein oder einen Spiegel hinterleuchten. Die Polarisationseinrichtung ist vorzugsweise der Lichtquelle nachgeschaltet, kann aber integraler Bestandteil der Leuchte oder des Leuchtmittels sein. Ebenso kann die Leuchte, das Leuchtmittel oder die Lichtquelle prinzipbedingt schon linear polarisiertes Licht erzeugen und insbesondere ohne eigens dafür vorgesehene Polarisationseinrichtung ausgeführt sein.

Vorzugsweise umfasst ein Fahrzeug einen Außenspiegel, eine durch den Außenspiegel getragene Leuchte und eine Seitenscheibe, durch die Licht der Leuchte in das Fahrzeug dringt. Das Licht der Leuchte ist oder wird im Wesentlichen parallel zur Einfallsebene des Lichtes polarisiert.

Die Einfallsebene ist definiert durch einen Normalenvektor der Fahrzeugscheibe, insbesondere Seitenscheibe, in einem Einfallspunkt des Lichtes auf der Fahrzeugscheibe, insbesondere Seitenscheibe, und die Einfallsrichtung des Lichtes. Eine Soll-Einfallsrichtung (bzw. Soll-Ausbreitungsrichtung) des Lichtes ist vorgegeben, wobei die Einfallsebene definiert ist durch den Normalenvektor der Fahrzeugscheibe, insbesondere Seitenscheibe, in dem Schnittpunkt der Soll-Einfallsrichtung mit der Fahrzeugscheibe, insbesondere Seitenscheibe, und die Soll-Einfallsrichtung des Lichtes. Wenn zudem die Leuchte derart ausgeführt ist, dass durch die Leuchte Licht bevorzugt, beispielsweise mehr als 30%, 50% oder 70 % des von der Leuchte erzeugten Lichtstromes, im Wesentlichen in Richtung der Soll-Einfallsrichtung abgestrahlt wird, dann kann der durch die Fahrzeugscheibe, insbesondere Seitenscheibe, reflektierte Anteil des von der Leuchte stammenden Lichts besonders wirksam reduziert werden.

Die Soll-Einfallsrichtung ist vorzugsweise von der Leuchte in Richtung der 95%-Augenellipse gerichtet, um dem Fahrer eine gute Wahrnehmung der von der Leuchte ausgehenden Signale zu ermöglichen.

Gemäß einer bevorzugten Ausführungsform ist die Leuchte derart eingerichtet, dass sie zumindest zeitweise ein Blinklicht abstrahlt.

Vorzugsweise ist die Leuchte zur Signalisierung eines Objektes oder einer Gefahr im Umfeld des Fahrzeuges eingerichtet.

Im Folgenden wird die Erfindung anhand von Beispielen unter Bezugnahme auf die folgende Figur näher erläutert:

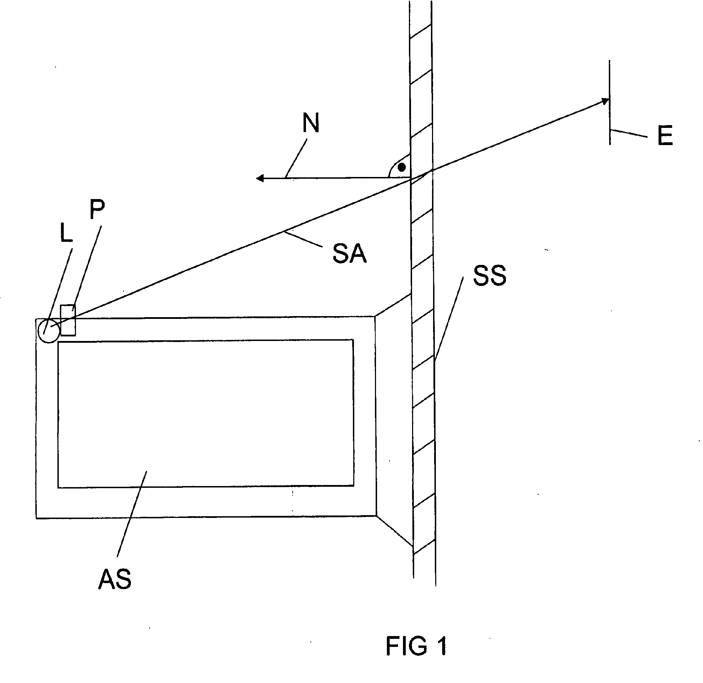

- Figur 1: zeigt eine vereinfachte schematische Schnittdarstellung eines Teils eines Fahrzeuges.

In Figur 1 ist eine Seitenscheibe SS eines Fahrzeuges im Schnitt dargestellt. Außerhalb der Seitenscheibe SS ist ein Außenspiegel AS dargestellt, der eine Signalleuchte L trägt. Innerhalb der Seitenscheibe SS ist ein Schnitt durch eine 95%-Augenellipse E dargestellt. Die Augenellipse nach SAE J941 stellt ein Hilfsmittel zur Konstruktion von Sichtlinien unter Berücksichtigung der Verteilung der Augenlagen im Fahrzeug dar. Dabei charakterisiert sie die Verteilung der Augenlagen in einer bestimmten Ebene des Fahrzeugs (zumeist einer parallel zur ZERO-Y- bzw. ZERO-Z-Ebene des Fahrzeugkoordinatensystems. Die Lage der Ellipse ist durch Größe und Neigung Ihrer Hauptachsen sowie die Lage ihres Mittelpunktes bezüglich des Seating Reference Points bestimmt, wobei die x- und z-Koordinate in Abhängigkeit der Rückenlehnenneigung variiert. Mathematisch stellt die Augenellipse die Kontur der gleichen Häufigkeitsdichte in einer zweidimensionalen Normalverteilung dar. Pragmatisch entsteht die Augenellipse in der Art, dass in eine zweidimensionale Verteilung von Augpunktlagen, die durch Versuche ermittelt wurden, Geraden in beliebiger Richtung eingezeichnet werden. Diese werden dabei so gelegt, dass die gemessenen Augenlagen immer im gleichen Verhältnis, d. h. immer der gleiche Prozentsatz der Augpunkte, hier 95%, auf der einen, die restlichen 5% somit auf der anderen Seite der Geraden liegen. Die Einhüllende all dieser Geraden ist dann eine Ellipse (hier die so genannte 95%-Augenellipse, da 95% aller Augpunktlagen auf der der Ellipse zugewandten Seite der Geraden liegen).

Das Licht der Leuchte L wird bevorzugt parallel zu einer definierten Soll-Einfallsrichtung SA abgestrahlt, die von der Leuchte L in Richtung der 95%-Augenellipse E weist. Ausgehend von dem Punkt der Seitenscheibe SS, an dem die Soll-Einfallsrichtung SA auf die Seitenscheibe SS trifft, ist ein Normalenvektor N eingezeichnet. Der Normalenvektor N definiert zusammen mit der Soll-Einfallsrichtung SA eine oder die Einfallsebene (nicht dargestellt).

Durch eine Polarisationseinrichtung P wird das Licht der Leuchte P derart polarisiert oder gefiltert, dass das Licht parallel zu der Einfallsebene polarisiert ist.

Brechungseffekte, beispielsweise an der Seitenscheibe, wurden im Rahmen dieser Beschreibung aus Vereinfachungsgründen vernachlässigt, können aber bei einer Umsetzung der Erfindung in die Praxis einfach berücksichtigt werden.

## Patentansprüche

1. Fahrzeug
- mit einer außerhalb der Fahrgastzelle angeordneten Leuchte (L),
- mit einer Fahrzeugscheibe (SS), durch die Licht der Leuchte (L) in das Fahrzeug dringt,
- wobei die Leuchte (L) eine Polarisationseinrichtung (P) umfasst oder der Leuchte (L) eine Polarisationseinrichtung (P) zugeordnet ist,
- mit einem Außenspiegel (AS), wobei die Leuchte (L) und/oder die Polarisationseinrichtung (P) durch den Außenspiegel (AS) getragenen wird,
**dadurch gekennzeichnet, dass** die Polarisationseinrichtung (P) derart angeordnet und ausgeführt ist, dass Licht der Leuchte (L) parallel zu einer Einfallsebene des Lichtes polarisiert ist oder wird, und
- wobei die Einfallsebene definiert ist durch eine Soll-Einfallsrichtung (SA) des Lichtes und den Normalenvektor (N) der Fahrzeugscheibe (SS) in de Schnittpunkt der Soll-Einfallsrichtung (SA) mit der Fahrzeugscheibe (SS).

2. Fahrzeug nach Anspruch 1,
bei dem die Leuchte (L) derart ausgeführt ist, dass durch die Leuchte (L) Licht bevorzugt parallel zur Soll-Einfallsrichtung (SA) abgestrahlt wird.

3. Fahrzeug nach einem der vorhergehenden Ansprüche,
bei dem die Soll-Einfallsrichtung (SA) von der Leuchte (L) in Richtung einer 95%-Augenellipse (E) gerichtet ist.

4. Fahrzeug nach einem der vorhergehenden Ansprüche,
bei dem die Leuchte (L) zumindest zeitweise ein Blinklicht abstrahlt.

5. Fahrzeug nach einem der vorhergehenden Ansprüche, bei dem die Leuchte (L) zur Signalisierung eines Objektes oder einer Gefahr im Umfeld des Fahrzeuges eingerichtet ist.

## Claims

1. A vehicle
- with a lamp (L) arranged outside the passenger compartment,
- with a vehicle window (SS), through which light from the lamp (L) passes into the vehicle,
- wherein the lamp (L) comprises a polarisation device (P) or the lamp (L) is allocated a polarisation device (P),
- with an external mirror (AS), wherein the lamp (L) and/or the polarisation device (P) is carried by the external mirror (AS),
**characterised in that** the polarisation device (P) is arranged and configured in such a way that light from the lamp (L) is or will be polarised parallel to a plane of incidence of the light, and
- wherein the plane of incidence is defined by a desired direction (SA) of incidence of the light and the normal vector (N) of the vehicle window (SS) in the intersection point of the desired direction (SA) of incidence with the vehicle window (SS).

2. A vehicle according to claim 1, wherein the lamp (L) is configured in such a way that light is preferably emitted parallel to the desired direction (SA) of incidence by the lamp (L).

3. A vehicle according to either of the preceding claims, wherein the desired direction (SA) of incidence from the lamp (L) is directed in the direction of a 95% eye ellipse (E).

4. A vehicle according to any one of the preceding claims, wherein the lamp (L) at least at times emits a flashing light.

5. A vehicle according to any one of the preceding claims, wherein the lamp (L) is set up to signal an object or a danger in the surroundings of the vehicle.

## Revendications

1. Véhicule comprenant,
- un feu (L) installé à l'extérieur de l'habitacle,
- une vitre (SS) à travers laquelle la lumière du feu (L) pénètre dans le véhicule,
- le feu (L) ayant une installation de polarisation (P) ou une installation de polarisation (P) est associé au feu (L),
- un rétroviseur extérieur (AS),
- le feu (L) et/ou l'installation de polarisation (P) étant portés par le rétroviseur extérieur (AS),
véhicule **caractérisé en ce que**
l'installation de polarisation (P) est montée et réalisée pour que la lumière du feu (L) soit ou sera polarisée parallèlement au plan d'incidence de la lumière, et
- le plan d'incidence est défini par une direction d'incidence de consigne (SA) de la lumière, le vecteur (N) normal à la vitre (SS) du véhicule au point d'intersection de la direction d'incidence de consigne (SA) et de la vitre (SS) du véhicule.

2. Véhicule selon la revendication 1,
**caractérisé en ce que**
le feu (L) est réalisé pour rayonner la lumière de préférence parallèlement à la direction d'incidence de consigne (SA).

3. Véhicule selon l'une des revendications précédentes,
**caractérisé en ce que**
la direction d'incidence de consigne (SA) du feu (L) est dirigée dans la direction de l'ellipse de l'oeil (E) à 95 %.

4. Véhicule selon l'une des revendications précédentes,
**caractérisé en ce que**
le feu (L) rayonne au moins en partie une lumière clignotante.

5. Véhicule selon l'une des revendications précédentes,
**caractérisé en ce que**
le feu (L) est installé pour signaler un objet ou un risque dans l'environnement du véhicule.
